# FASCICULE DE BREVET EUROPEEN

(11) **EP 4 168 751 B1**
(45) Date de publication et mention de la délivrance du brevet: **03.12.2025**
(21) Numéro de dépôt: 21740598.4
(22) Date de dépôt: 17.06.2021
(51) Int. Cl.: G01F 1/66, G01F 15/14, G01F 1/667

(54) **DÉBITMÈTRE ET SON PROCÉDÉ DE MONTAGE**
DURCHFLUSSMESSER UND MONTAGEVERFAHREN DAFÜR
FLOW METER AND ASSEMBLY METHOD THEREFOR

(30) Priorité: 19.06.2020 FR 2006425
(43) Date de publication de la demande: 26.04.2023
(73) Titulaire: Integra Metering AG, 4106 Thervil (CH)
(72) Inventeur: ADI, Jean-Pierre, 81000 ALBI (FR); RAMOND, Alain, 31000 TOULOUSE (FR); POQUE, Mathieu, 312090 VILLEFRANCHE-DE-LAURAGAIS (FR); ZEIDAN, Marwan, 82000 MONTAUBAN (FR)
(74) Mandataire: BARRE LAFORGUE
(86) Numéro de dépôt international: PCT/FR2021/051100
(87) Numéro de publication internationale: WO 2021/255398

(56) Documents cités:
- CN-U- 210 533 453
- DE-A1- 102011 101 257

## Description

L'invention concerne un débitmètre et son procédé de montage.

La mesure d'un temps de parcours d'une onde ultrasonore dans un fluide à l'aide d'au moins un transducteur ultrasonore permet d'en déduire le débit du fluide. Il existe de nombreuses catégories de débitmètres à ultrasons, dans lesquels le débit d'un fluide est mesuré par la vitesse de propagation d'une onde ultrasonore dans un fluide circulant dans une canalisation.

La présente invention s'applique aux débitmètres dans lesquels le transducteur ou au moins son dispositif de montage traverse la paroi de la canalisation pour rentrer en contact avec le fluide dont le débit est à mesurer, ainsi qu'aux débitmètres dans lesquels les transducteurs et/ou leur dispositif de montage est installé à l'extérieur de la canalisation et dont la mesure est effectuée par transmission d'ondes au travers des parois de celle-ci.

On connaît déjà du document FR 3 047 068 un dispositif de montage d'un transducteur à ultrasons adapté pour être monté au travers d'une paroi d'un débitmètre comportant une canalisation, ledit dispositif étant adapté pour orienter une direction d'émission / réception du transducteur selon une direction diagonale, dite direction de mesure, formant un angle prédéterminé avec un axe longitudinal de la canalisation dans un plan de symétrie longitudinal de celle-ci.

Les débitmètres comprenant des transducteurs ainsi orientés avec une direction de mesure selon une direction diagonale par rapport à la canalisation présentent en général un encombrement supérieur à d'autres débitmètres dont les transducteurs seraient disposés d'un même côté de la canalisation notamment. De tels débitmètres présentent donc des contraintes accrues relatives à l'agencement et à l'assemblage des différents éléments composant ledit débitmètre. Un autre exemple de débitmètre connu dans l'art antérieur est divulgué par le document CN 210533453U.

L'invention vise donc à proposer un débitmètre qui permette un agencement et une fixation facilités des éléments composant ledit débitmètre tout en limitant son encombrement.

L'invention permet également de proposer un débitmètre pouvant être fabriqué en grandes séries à des coûts compatibles avec son exploitation à l'échelle industrielle et avec une utilisation dans les usages courants, par exemple pour la mesure de débit dans les canalisations d'adduction d'eau.

Plus précisément, l'invention a pour objet un débitmètre comportant :
- une canalisation de mesure du débit d'un fluide,
- un premier transducteur à ultrasons et un deuxième transducteur à ultrasons, lesdits transducteurs à ultrasons étant montés en regard l'un de l'autre vis-à-vis d'une paroi de ladite canalisation, lesdits transducteurs étant orientés selon une direction de mesure formant un angle non nul et inférieur à 90° avec un axe longitudinal de la canalisation,
caractérisé en ce qu'il comprend en outre un boîtier comprenant :
- un réceptacle principal rapporté sur ladite canalisation et délimitant un volume interne principal ;
- une première manche et une deuxième manche s'étendant selon une direction orthogonale à l'axe longitudinal de ladite canalisation, en saillie depuis un fond du réceptacle principal et de part et d'autre de ladite canalisation de sorte que la canalisation n'est pas à l'intérieur dudit volume interne principal du réceptacle principal, la première manche étant configurée de manière à recouvrir au moins partiellement ledit premier transducteur à ultrasons de façon à délimiter un volume interne de réception dudit premier transducteur à ultrasons, et la deuxième manche étant configurée de manière à recouvrir au moins partiellement ledit deuxième transducteur à ultrasons de façon à délimiter un volume interne de réception dudit deuxième transducteur à ultrasons, le volume interne principal du réceptacle principal étant en communication avec ledit volume interne de réception dudit premier transducteur à ultrasons et avec ledit volume interne de réception dudit deuxième transducteur à ultrasons.

Dans tout le texte, on entend par le fait que les transducteurs soient orientés selon une direction de mesure que les faces principales (ou faces d'émission / réception) desdits transducteurs sont orthogonales à ladite direction de mesure ou direction d'émission / réception des ondes ultrasonores.

Dans certains modes de réalisation conformes à l'invention, ledit débitmètre comprend une carte électronique disposée à l'intérieur dudit réceptacle principal, et le premier et le deuxième transducteur à ultrasons comprennent chacun une plaquette piézoélectrique et deux tiges conductrices reliées électriquement à ladite carte électronique.

Dans certains modes de réalisation conformes à l'invention, les deux tiges conductrices de chaque transducteur à ultrasons sont rigides et s'étendent parallèlement l'une par rapport à l'autre, selon une direction orthogonale au plan de la carte électronique.

Dans certains modes de réalisation conformes à l'invention, chaque transducteur est fixé à ladite canalisation par une bride de montage.

Dans certains modes de réalisation conformes à l'invention, le réceptacle principal comprend une ouverture principale et un capot principal apte à obturer ladite ouverture principale.

Dans certains modes de réalisation conformes à l'invention, ledit débitmètre comprend en outre un afficheur relié électriquement à ladite carte électronique, ledit capot principal définissant un logement de réception dudit afficheur et comprenant un joint périphérique disposé autour dudit logement de réception dudit afficheur.

Dans certains modes de réalisation conformes à l'invention, chaque manche comporte une ouverture, et en ce que le débitmètre comporte en outre un capot secondaire apte à obturer chaque ouverture.

Dans certains modes de réalisation conformes à l'invention, ledit débitmètre comprend un matériau de comblement choisi dans un groupe formé de résines thermodurcies, ledit matériau de comblement remplissant au moins ledit volume interne principal du réceptacle principal. En particulier, ledit matériau de comblement est choisi dans le groupe formé des résines époxydes (ou « époxy »), des polyuréthanes, des silicones (notamment les polydiméthylsiloxanes (PDMS)), de leurs copolymères et de leurs mélanges.

Dans certains modes de réalisation conformes à l'invention, ledit matériau de comblement remplit totalement ledit volume interne principal du réceptacle principal, le volume interne de réception dudit premier transducteur et le volume interne de réception dudit deuxième transducteur à ultrasons.

L'invention s'étend également à un procédé de montage d'un tel débitmètre.

L'invention concerne donc également un procédé de montage d'un tel débitmètre, caractérisé en ce qu'il comporte les étapes suivantes :
- on fixe le premier transducteur à ultrasons et le deuxième transducteur à ultrasons sur la canalisation,
- on monte le boîtier sur ladite canalisation de manière à ce que la première manche recouvre au moins partiellement ledit premier transducteur à ultrasons de façon à délimiter le volume interne de réception dudit premier transducteur à ultrasons, et à ce que la deuxième manche recouvre au moins partiellement ledit deuxième transducteur à ultrasons de façon à délimiter le volume interne de réception dudit deuxième transducteur à ultrasons, le volume interne principal du réceptacle principal étant en communication avec ledit volume interne de réception dudit premier transducteur à ultrasons et avec ledit volume interne de réception dudit deuxième transducteur à ultrasons.

Dans certains modes de réalisation conformes à l'invention, ledit procédé comporte en outre une étape lors de laquelle on dispose la carte électronique à l'intérieur dudit réceptacle principal.

Dans certains modes de réalisation conformes à l'invention, dans ledit procédé, consécutivement audit montage dudit boîtier sur ladite canalisation, on relie électriquement chaque tige conductrice de chaque transducteur à ultrasons à ladite carte électronique.

Dans certains modes de réalisation conformes à l'invention, dans ledit procédé, on introduit le matériau de comblement sous forme liquide par au moins une ouverture parmi l'ouverture de ladite première manche et l'ouverture de ladite deuxième manche. Dans certains modes de réalisation conformes à l'invention, dans ledit procédé, chaque manche comportant une ouverture et le débitmètre comportant en outre un capot secondaire apte à obturer chaque ouverture, après avoir relié électriquement chaque tige conductrice à ladite carte électronique, on introduit le matériau de comblement sous forme liquide par les ouvertures de ladite première manche et de ladite deuxième manche, puis, on obture les ouvertures par les capots secondaires.

Dans certains modes de réalisation conformes à l'invention, dans ledit procédé, on introduit le matériau de comblement sous forme liquide de façon à remplir totalement ledit volume interne principal du réceptacle principal, le volume interne de réception dudit premier transducteur et le volume interne de réception dudit deuxième transducteur à ultrasons.

Dans certains modes de réalisation conformes à l'invention, dans ledit procédé, préalablement à ladite étape au cours de laquelle on introduit le matériau de comblement sous forme liquide par au moins une ouverture desdites manches, on introduit chaque élément du débitmètre destiné à être disposé dans le volume interne principal du réceptacle principal. Ces éléments peuvent être pré-assemblés entre eux ou non préalablement à leur montage à l'intérieur dudit réceptacle principal. Il peut par exemple s'agir d'accumulateurs électriques, d'une deuxième carte électronique, d'un afficheur, etc... En particulier, préalablement à ladite étape au cours de laquelle on introduit le matériau de comblement sous forme liquide par au moins une ouverture desdites manches, on obture ladite ouverture principale dudit réceptacle principal. Plus particulièrement, préalablement à ladite étape au cours de laquelle on introduit le matériau de comblement sous forme liquide, on fixe ledit capot principal sur l'ouverture principale dudit réceptacle principal.

Dans certains modes de réalisation conformes à l'invention, dans ledit procédé, après avoir introduit ledit matériau de comblement sous forme liquide, on réalise une étape de durcissement, en particulier une étape dite de polymérisation, dudit matériau de comblement.

Dans certains modes de réalisation conformes à l'invention, dans ledit procédé, après avoir réalisé ladite étape de durcissement et/ou préalablement à ladite étape de durcissement dudit matériau de comblement, on fixe un capot secondaire sur l'ouverture de ladite première manche et on fixe un capot secondaire sur l'ouverture de ladite deuxième manche.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
[Fig. 1] la figure 1 est une vue en perspective d'un débitmètre selon un premier mode de réalisation de l'invention,
[Fig. 2] la figure 2 est une vue de côté d'un débitmètre selon le premier mode de réalisation de l'invention,
[Fig. 3] la figure 3 est une vue de dessus d'un débitmètre selon le premier mode de réalisation de l'invention,
[Fig. 4] la figure 4 est une vue de côté (de face) d'un débitmètre selon le premier mode de réalisation de l'invention,
[Fig. 5] la figure 5 est une vue éclatée d'un débitmètre selon le premier mode de réalisation de l'invention,
[Fig. 6] la figure 6 est une vue en perspective du boîtier ouvert d'un débitmètre selon le premier mode de réalisation de l'invention,
[Fig. 7] la figure 7 est une vue de côté du boîtier ouvert d'un débitmètre selon le premier mode de réalisation de l'invention,
[Fig. 8] la figure 8 est une vue de dessus du boîtier ouvert d'un débitmètre selon le premier mode de réalisation de l'invention,
[Fig. 9] la figure 9 est une vue de dessous du boîtier ouvert d'un débitmètre selon le premier mode de réalisation de l'invention.

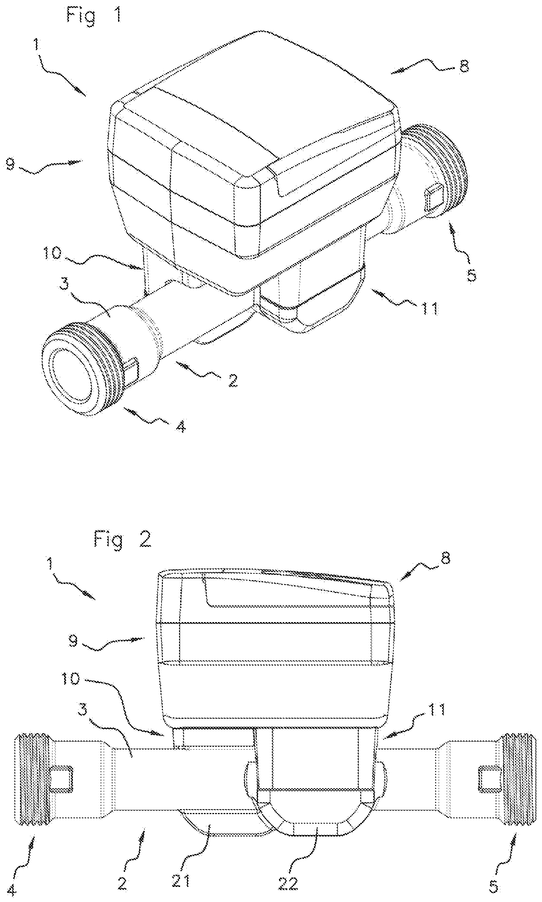

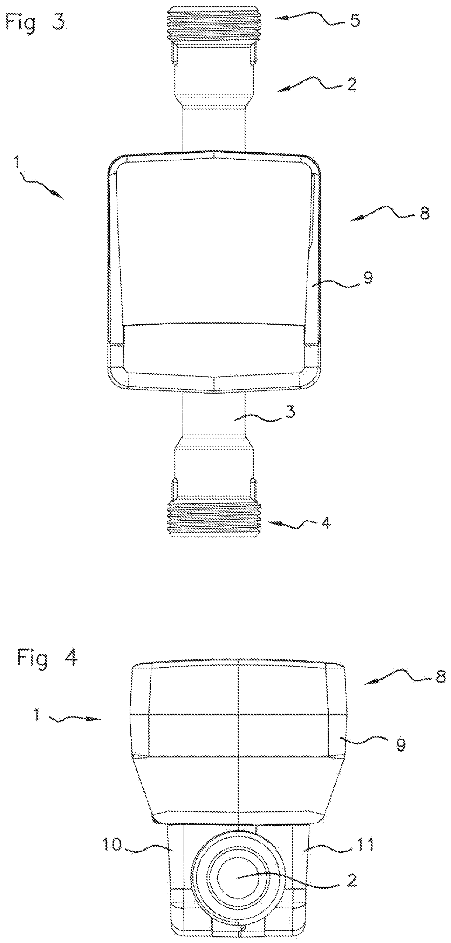

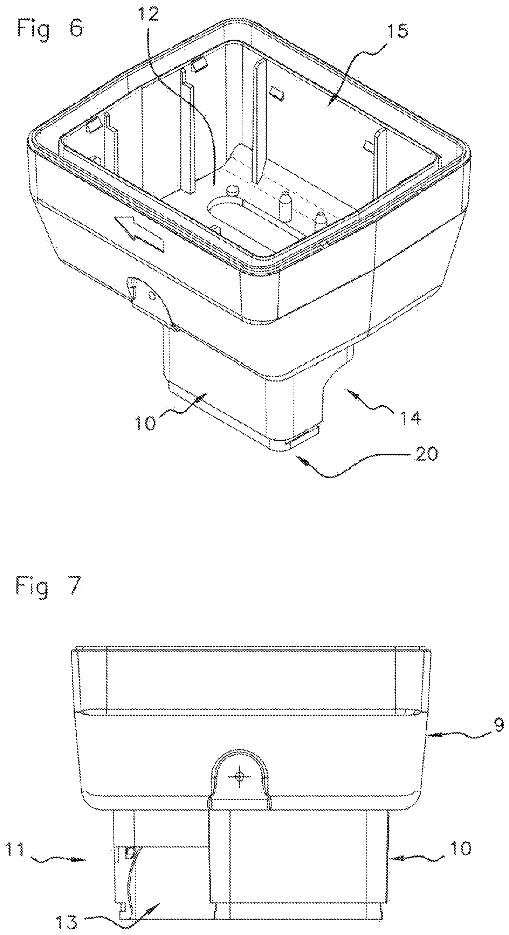

Le débitmètre 1 représenté aux figures 1 à 9 comporte une canalisation 2 adaptée pour permettre la circulation d'un fluide à l'intérieur de ladite canalisation. La canalisation 2 se présente sous la forme générale d'un tube 3 terminé aux deux extrémités par des raccords filetés 4, 5. Entre les raccords 4, 5, la canalisation 2 peut être parcourue par un fluide. Dans l'exemple représenté, le tube 3 comporte deux plateaux 38, 39 moulés ou usinés sur le tube 3, diamétralement opposés par rapport à celui-ci et décalés l'un par rapport à l'autre le long de l'axe longitudinal de la canalisation 2 pour des raisons qui seront apparentes dans la suite de la description. Chaque plateau 38, 39 comprend un orifice débouchant dans la canalisation 2.

Un tel débitmètre 1 comprend en outre un boîtier 8 comprenant un réceptacle 9 principal rapporté sur ladite canalisation 2 et délimitant un volume interne principal. Ledit boîtier 8 comprend également une première manche 10 et une deuxième manche 11 s'étendant selon une direction orthogonale à l'axe longitudinal de ladite canalisation 2. Ladite première manche 10 et ladite deuxième manche 11 s'étendent en saillie depuis un fond 12 du réceptacle 9 principal et de part et d'autre de ladite canalisation 2. Chaque manche 10, 11 est configurée de façon à délimiter, en particulier avec la paroi de la canalisation 2, un volume interne en communication avec le volume interne principal du réceptacle 9 principal. La canalisation 2 est disposée entre ladite première manche 10 et ladite deuxième manche 11. Pour des raisons qui seront apparentes dans la suite de la description, la première manche 10 et la deuxième manche 11 ne se font pas face, mais sont décalées l'une par rapport à l'autre le long de l'axe longitudinal de la canalisation 2.

Comme on peut également le voir sur les figures, la canalisation 2 n'est pas à l'intérieur du volume interne principal du boîtier 8. Le boîtier d'un débitmètre selon l'invention ne contient donc pas la canalisation et n'a pas besoin de l'entourer entièrement. Ceci a pour avantage de permettre de limiter l'encombrement du boîtier, et donc du débitmètre 1.

Divers modes de réalisation peuvent être envisagés en ce qui concerne les dimensions et les formes dudit boîtier 8, en particulier dudit réceptacle 9 principal et desdites manches 10, 11. Dans le mode de réalisation représenté aux figures 1 à 9, le réceptacle 9 principal présente une forme générale parallélépipédique prolongée desdites deux manches 10, 11 à partir du fond 12 du réceptacle 9 principal. Le réceptacle 9 principal peut présenter toute autre forme quelconque ou encore une forme cubique ou cylindrique.

Dans le mode de réalisation représenté aux figures 1 à 9, chaque manche présente, à partir du fond 12 du réceptacle 9 principal, une forme générale parallélépipédiquedont une face disposée du côté de la canalisation 2 présente un évidement 13, 14 . Dans le mode de réalisation représenté aux figures 1 à 9, le volume interne associé à chaque manche 10, 11 est donc également délimité par la paroi de la canalisation 2 du côté évidé de chaque manche 10, 11.

Le réceptacle 9 principal du boîtier 8 comprend une ouverture 15 principale et un capot 16 principal apte à obturer ladite ouverture principale. Dans la variante de réalisation représentée aux figures 1 à 9, le fond 12 du réceptacle 9 principal est opposé à l'ouverture 15 principale du boîtier et au capot 16 principal lorsqu'il est en place pour obturer l'ouverture 15 principale. Toutefois, rien n'empêche de prévoir que l'ouverture principale du réceptacle principal soit disposée différemment, par exemple à la place d'au moins une portion d'une paroi latérale du réceptacle principal adjacente audit fond. Rien n'empêche également de prévoir que le réceptacle présente plusieurs ouvertures, ladite ouverture principale du réceptacle principal ou lesdites ouvertures du réceptacle principal étant adaptée(s) pour permettre l'introduction des éléments à introduire à l'intérieur du volume interne principal dudit réceptacle principal.

Dans la variante de réalisation représentée aux figures 1 à 9, le boîtier comprend en outre un afficheur 17 et le capot 16 principal définit un logement de réception de l'afficheur 17. Dans le mode de réalisation représenté, ce logement de réception dudit afficheur comprend un hublot 18 transparent permettant la visualisation des données représentées sur l'afficheur 17. Le hublot 18 transparent peut comporter un joint périphérique d'étanchéité. Dans le mode de réalisation représenté, le boîtier 8 comprend en outre un plateau 42 afficheur disposé sous le capot 16 principal, le plateau 42 afficheur comprenant un hublot 43 transparent permettant la visualisation des données représentées sur l'afficheur 17 et un joint périphérique. Dans le mode de réalisation représenté, le plateau 42 afficheur comprend un joint périphérique adapté pour assurer une étanchéité entre les deux faces du plateau 42. En complément ou en alternative, il est également possible de prévoir que le capot 16 principal comporte un tel joint périphérique. En outre, une résine transparente peut éventuellement être disposée entre l'afficheur 17 et le hublot 43 transparent afin d'éviter la formation de buée et de garantir une bonne visualisation de l'afficheur 17 à travers le hublot 43.

En outre, chaque manche 10, 11 comporte une ouverture 19, 20 et le débitmètre 1 comporte en outre un capot 21, 22 secondaire apte à obturer chaque ouverture 19, 20. En d'autres termes, un premier capot 22 secondaire permet d'obturer l'ouverture 20 de la première manche 10 et un deuxième capot 21 secondaire permet d'obturer l'ouverture 19 de la deuxième manche 11. Dans la variante de réalisation représentée aux figures 1 à 9, l'ouverture de chaque manche 10, 11 se situe au niveau de l'extrémité distale de ladite manche, c'est-à-dire l'extrémité la plus éloignée du fond 12 du réceptacle principal du boîtier, l'« extrémité proximale » de chaque manche étant disposée au niveau du fond 12 du boîtier. Chaque capot 21, 22 secondaire présente une forme incurvée conjuguée de la forme des plateaux 38, 39. Chaque capot 21, 22 secondaire peut également présenter toute autre forme adaptée pour obturer chaque ouverture 19, 20 de chaque manche 10, 11, par exemple une forme parallélépipédique.

L'ouverture 19, 20 de chaque manche permet avantageusement, en fin d'un processus de montage des différents éléments composant le débitmètre, l'introduction d'un matériau de comblement choisi dans un groupe formé de résines thermodurcissables. En particulier, ledit matériau de comblement est choisi dans un groupe formé des résines époxydes (ou « époxy »), des polyuréthanes, des silicones (notamment les polydiméthylsiloxanes (PDMS)), de leurs copolymères et de leurs mélanges. De telles résines thermodurcissables peuvent être adaptées pour pouvoir poliymériser à température ambiante (entre 18°C et 25°C par exemple) ou nécessiter un chauffage à une température supérieure à la température ambiante pendant une durée prédéterminée (par exemple dans une étuve à 50°C pendant 1 à 3 heures).

Dans une variante de réalisation particulièrement avantageuse, le débitmètre comprend donc également un matériau de comblement remplissant au moins en partie ledit volume interne principal du réceptacle principal, et en particulier ledit volume interne principal du réceptacle principal et le volume interne de chaque manche, et en dehors du logement de réception de l'afficheur. Le matériau de comblement peut être introduit à l'état liquide par l'ouverture de chaque manche 10, 11.

Un tel matériau de comblement a pour avantage de protéger les éléments électroniques du débitmètre 1 (cartes 24, 25 électroniques, liaisons électriques, câbles électriques...) des conditions environnementales (atmosphère, humidité, eau...) auquel le débitmètre est soumis en conditions d'utilisation, et permet, en outre, de consolider l'assemblage des éléments le composant entre eux, en particulier les connecteurs électroniques, et donc notamment d'augmenter la résistance du débitmètre aux vibrations mécaniques. Le matériau de comblement permet donc de consolider l'assemblage du débitmètre en s'étendant dans chaque manche 10, 11 au contact des éléments qu'il contient ainsi que de la paroi de la canalisation 2 et autour d'une portion de la canalisation disposée entre les manches du boîtier.

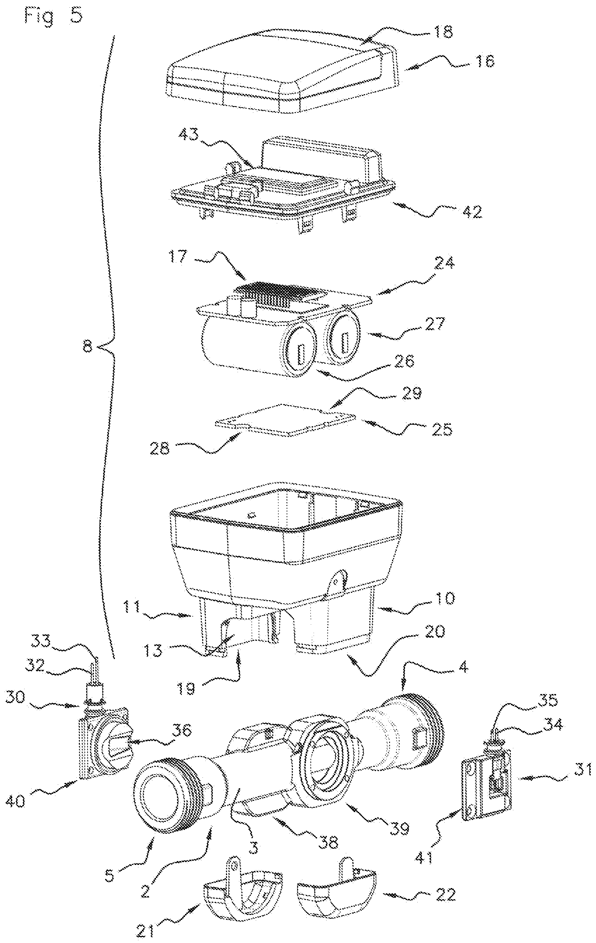

En particulier, dans une variante de réalisation d'un débitmètre selon l'invention, au moins une carte 25 électronique est disposée à l'intérieur du volume interne principal dudit réceptacle principal. Dans le mode de réalisation représenté aux figures 1 à 9, et comme on peut le voir sur la figure 5 en particulier, la carte 25 électronique est disposée parallèlement au fond 12 du réceptacle principal. Dans une variante de réalisation d'un débitmètre selon l'invention, le débitmètre comprend également au moins un accumulateur 26, 27 électrique tel qu'une pile, rechargeable ou non, relié électriquement à la carte électronique et disposé au sein du volume interne principal du réceptacle 9 principal. En particulier, dans une variante de réalisation d'un débitmètre selon l'invention, une deuxième carte 24 électronique peut être disposée à l'intérieur du volume interne principal dudit réceptacle principal. Dans la variante de réalisation illustrée, la première carte 25 électronique permet de piloter les transducteurs 30, 31 à ultrasons, de réaliser les mesures liées aux signaux ultrasons, de calculer le débit de fluide circulant dans la canalisation à partir de ces données, et donc d'incrémenter l'index de volume de fluide passé dans cette conduite, tandis que la deuxième carte 24 électronique comprend notamment un écran pour l'afficheur 17 ainsi que d'éventuels autres organes de communication de données (NFC, antenne radio pour divers protocole, communication -filaire, ...). La carte 24 peut également comprendre un microprocesseur apte à effectuer des calculs à partir des données fournies par la carte électronique 25, afin de les communiquer sous divers formats. Chaque carte 24, 25 électronique peut également présenter une ou plusieurs entailles ou encoches 28, 29 sur les bords de ladite carte 25 électronique, et/ou un ou plusieurs trous ou lumières traversant son épaisseur afin de faciliter le passage du matériau de comblement à l'intérieur du volume interne principal du boîtier lorsque le matériau de comblement est introduit par chaque ouverture 19, 20 des manches. En combinaison ou en alternative avec de tels trous ou entailles, la carte 25 électronique et le boîtier 8 peuvent également être configurés de telle sorte qu'un espace latéral est laissé libre entre au moins un bord de la carte 25 électronique et les parois internes du boîtier 8, laissant ainsi le matériau de comblement se répandre à l'intérieur du volume interne principal du réceptacle 9 principal. Par ailleurs, de telles lumières ou encoches peuvent être conjuguées à des contre-formes prévues dans le fond 12 du réceptacle 9 principal afin de présenter une fonction de détrompage lors du montage.

Un débitmètre selon l'invention comprend également un premier transducteur 30 à ultrasons et un deuxième transducteur 31 à ultrasons, lesdits transducteurs à ultrasons étant montés sur la canalisation 2 et en regard l'un de l'autre et orientés selon une direction de mesure formant un angle non nul et inférieur à 90° avec un axe longitudinal de la canalisation 2. En particulier, les transducteurs 30, 31 à ultrasons sont disposés en diagonale l'un par rapport à l'autre vis-à-vis de la canalisation 2. Une telle disposition a pour avantage de faciliter la connexion des transducteurs 30, 31 à ultrasons à une carte électronique et permet notamment d'éviter l'utilisation de fils électriques susceptibles de les relier par l'extérieur du boîtier d'un débitmètre. Plus précisément, les deux transducteurs 30, 31 à ultrasons sont placés de part et d'autre d'un tronçon tubulaire formant ladite canalisation, de façon à être disposés chacun dans les volumes internes délimités par la première manche 10 et la deuxième manche 11. En particulier, dans une variante de réalisation d'un débitmètre 1 selon l'invention et telle que représentée sur les figures, les transducteurs 30, 31 à ultrasons sont montés au travers de la paroi de la canalisation 2. Dans une variante de réalisation particulièrement avantageuse d'un débitmètre selon l'invention, l'angle entre la direction de mesure et l'axe longitudinal de la canalisation 2 est de l'ordre de 30° mais peut aller jusqu'à 50° voire plus en fonction des modèles de débitmètre.

En d'autres termes, grâce au décalage précité des deux manches 10, 11 le long de l'axe longitudinal de la canalisation 2, la première manche 10 du boîtier 8 recouvre au moins partiellement ledit premier transducteur 30 à ultrasons de façon à délimiter un volume interne de réception dudit premier transducteur à ultrasons, et la deuxième manche 11 du boîtier 8 recouvre au moins partiellement ledit deuxième transducteur 31 à ultrasons de façon à délimiter un volume interne de réception dudit deuxième transducteur à ultrasons. Comme indiqué précédemment, le volume interne principal du réceptacle 9 principal est en communication avec ledit volume interne de réception dudit premier transducteur 30 à ultrasons et avec ledit volume interne de réception dudit deuxième transducteur 31 à ultrasons.

Dans une variante de réalisation particulièrement avantageuse, les deux transducteurs 30, 31 à ultrasons sont assemblés à la canalisation 2 par des brides 40, 41 de montage, les manches 10, 11 et les capots 21, 22 secondaires du boîtier 8 entourant ces brides de montage.

Dans une variante de réalisation particulièrement avantageuse, le premier transducteur 30 à ultrasons et le deuxième transducteur 31 à ultrasons comprennent chacun une plaquette piézoélectrique et deux tiges 32, 33, 34, 35 conductrices reliées électriquement à la carte électronique 25. En particulier, comme on peut le voir sur la figure 5, les tiges 32 et 33 relient le premier transducteur 30 à ultrasons à la carte 25 électronique et les tiges 34 et 35 relient le deuxième transducteur 31 à ultrasons à la carte 25 électronique. De préférence, les deux tiges 32, 33, 34, 35 conductrices de chaque transducteur à ultrasons sont rigides et s'étendent parallèlement l'une par rapport à l'autre, selon une direction orthogonale au plan de la carte 25 électronique, et sont reliées électriquement à la carte 25 électronique par soudure. En particulier, dans la variante représentée, les tiges 32, 33, 34, 35 s'étendent du même côté de la conduite, ce qui permet de limiter l'encombrement du débitmètre. Ce faisant, le boîtier 8 se retrouve ainsi avantageusement maintenu à la canalisation par l'intermédiaire des tiges 32, 33, 34, 35 conductrices rigides soudées à la carte 25 électronique.

Dans une variante de réalisation particulièrement avantageuse, chaque transducteur 30, 31 est formé d'une plaquette de matériau piézoélectrique et de deux électrodes ou tiges conductrices. La plaquette de matériau piézoélectrique de chaque transducteur 30, 31 peut être protégée par un enrobage externe en matériau polymère. Dans la variante de réalisation représentée aux figures 1 à 9, les faces principales du transducteur sont orthogonales à la direction d'émission / réception des ondes ultrasonores. Chaque transducteur est monté de manière à ce que les transducteurs soient placés en vis-à-vis et que leur direction d'émission / réception respective coïncide avec la direction de mesure. Dans une variante de réalisation particulièrement avantageuse, le premier et le deuxième transducteur à ultrasons sont montés au travers de la paroi de la canalisation 2.

Dans la variante de réalisation représentée aux figures 1 à 9, pour orienter le transducteur selon la direction de mesure, chaque transducteur 30, 31 comporte sur sa surface active une niche 36 centrale dont la concavité est orientée vers l'intérieur de la canalisation 2, c'est-à-dire en direction de l'axe longitudinal. Cette niche 36 comporte au moins une face plane, dite face active, orthogonale à la direction de mesure. Les autres parois de la niche 36 peuvent avoir une forme quelconque pour autant que ces parois n'interfèrent pas avec les ondes ultrasonores. Par exemple, la niche comporte une face supérieure parallèle à la direction de mesure et deux faces latérales parallèles au plan de symétrie longitudinal de la canalisation contenant la direction de mesure.

Afin d'éviter que la niche forme une source de perturbations du flux de fluide ou de zones de stagnation de celui-ci, toutes les faces de la niche 36 sont reliées entre elles et à la surface active par des surfaces exemptes d'arêtes vives. Par exemple, toutes les surfaces planes sont reliées entre elles par des congés de rayon suffisant pour ne pas créer de turbulences dans les filets de fluide. Par exemple, pour une niche de 10 à 15 mm de profondeur, les rayons des congés sont de l'ordre de 0,5 à 1 mm.

La plaquette piézoélectrique présente avantageusement un contour polygonal, notamment carré ou rectangulaire, ou en forme générale de disque. La plaquette piézoélectrique est utilisée dans son mode de résonance en épaisseur. Dans la variante de réalisation représentée aux figures 1 à 9, la plaquette piézoélectrique peut présenter une épaisseur inférieure à 2 mm et des dimensions comprises entre 3 mm et 10 mm dans toutes les directions orthogonales à son épaisseur.

Chaque plaquette piézoélectrique est constituée d'un matériau piézoélectrique. Ce matériau piézoélectrique doit pouvoir émettre et recevoir des signaux ultrasonores et notamment à une fréquence de l'ordre de 4 MHz. Ce matériau est par exemple une céramique piézoélectrique telle que les titano-zirconates de plomb (PZT). Rien n'empêche d'utiliser d'autres matériaux piézoélectriques tels que des monocristaux.

Afin de procéder au montage d'un débitmètre selon l'invention on peut réaliser tout ou partie des étapes suivantes :
- on fixe tout d'abord le premier transducteur 30 à ultrasons et le deuxième transducteur 31 à ultrasons sur la canalisation 2,
- on monte alors le boîtier 8 sur ladite canalisation 2 de manière à ce que la première manche 10 recouvre au moins partiellement ledit premier transducteur 30 à ultrasons de façon à délimiter le volume interne de réception dudit premier transducteur à ultrasons, et à ce que la deuxième manche 11 recouvre au moins partiellement ledit deuxième transducteur 31 à ultrasons de façon à délimiter le volume interne de réception dudit deuxième transducteur à ultrasons;
- on dispose la carte 25 électronique à l'intérieur dudit réceptacle 9 principal, cette étape pouvant être réalisée indifféremment avant ou après l'étape précédente ;
- consécutivement au montage dudit boîtier 8 sur ladite canalisation 2, on relie électriquement chaque tige 32, 33, 34, 35 conductrice de chaque transducteur 30, 31 à ultrasons à ladite carte 25 électronique, de préférence par soudure ;
- dans un mode de réalisation préféré du débitmètre 1 dans lequel chaque manche 10, 11 comporte une ouverture 19, 20 et le débitmètre comportant en outre un capot 21, 22 secondaire apte à obturer chaque ouverture, après avoir relié électriquement chaque tige 32, 33, 34, 35 conductrice à ladite carte 25 électronique, on introduit le matériau de comblement sous forme liquide par les ouvertures distales de ladite première manche et de ladite deuxième manche, puis,
- on obture les ouvertures 19, 20 de chaque manche 10, 11 par les capots secondaires 21, 22,
- on réalise une étape de durcissement, en particulier de polymérisation, dudit matériau de comblement.

Dans un mode de réalisation préféré du débitmètre 1, préalablement à l'introduction dudit matériau de comblement, on assemble l'afficheur 17 sur la deuxième carte 24 électronique ainsi que les accumulateurs 26, 27 électriques, avec le plateau 42 afficheur, et on les dispose ainsi pré-assemblés dans ledit volume interne principal du réceptacle principal.

L'agencement des éléments disposés dans l'espace interne du boîtier 8 est adapté pour que le matériau de comblement puisse se répandre à l'état liquide dans l'espace interne du boîtier, en particulier au travers des trous ménagés dans la carte électronique.

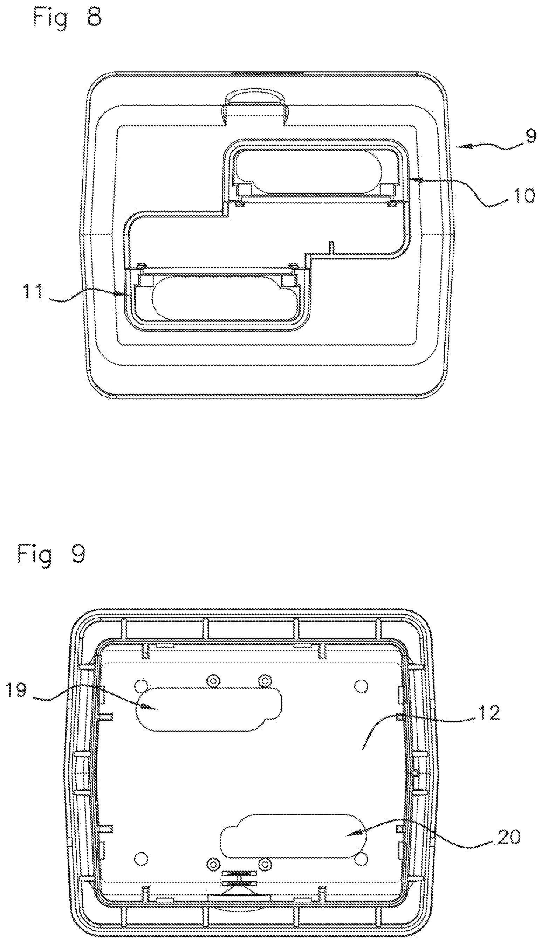

En particulier, lors de l'introduction du matériau de comblement sous forme liquide par les ouvertures 19, 20 de ladite première manche 10 et de ladite deuxième manche 11, le débitmètre est disposé de façon à ce que les ouvertures 19, 20 des manches 10, 11 soient orientées vers le haut (soit comme sur la vue du dessus du boîtier 8 en figure 8 ou après une rotation de l'ordre de 180° du débitmètre autour de l'axe longitudinal de la canalisation 2 tel que représenté sur les figures 1 et 2, les capots 21, 22 secondaires étant ôtés des manches 10, 11 pour permettre l'introduction du matériau de comblement).

Un matériau de comblement peut également être disposé de façon à remplir le logement de réception de l'afficheur 17 de sorte à éviter la présence d'humidité dans ce logement de réception de l'afficheur. En variante, l'afficheur peut être collé au hublot du capot 16 principal ou bien un matériau absorbeur d'humidité peut être disposé dans le logement de réception. Si le matériau de comblement utilisé dans ledit débitmètre 1 remplit le logement de réception de l'afficheur 17, on utilise alors un matériau de remplissage transparent.

Un débitmètre selon l'invention présente en outre une fiabilité, une durée de vie et une résistance dans les environnements agressifs, en particulier dans les milieux liquides, permettant son utilisation à des fins commerciales ou réglementaires.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, les manches peuvent également présenter une forme cylindrique ou hémicylindrique.

## Revendications

1. Débitmètre (1) comportant :
- une canalisation (2) de mesure du débit d'un fluide,
- un premier transducteur (30) à ultrasons et un deuxième transducteur (31) à ultrasons, lesdits transducteurs à ultrasons étant montés en regard l'un de l'autre vis-à-vis d'une paroi de ladite canalisation, lesdits transducteurs (30, 31) étant orientés selon une direction de mesure formant un angle non nul et inférieur à 90° avec un axe longitudinal de la canalisation,
**caractérisé en ce qu'**il comprend en outre un boîtier (8) comprenant :
- un réceptacle (9) principal rapporté sur ladite canalisation et délimitant un volume interne principal ;
- une première manche (10) et une deuxième manche (11) s'étendant selon une direction orthogonale à l'axe longitudinal de ladite canalisation (2), en saillie depuis un fond (12) du réceptacle (9) principal et de part et d'autre de ladite canalisation de sorte que la canalisation (2) n'est pas à l'intérieur dudit volume interne principal du réceptacle (9) principal, la première manche (10) étant configurée de manière à recouvrir au moins partiellement ledit premier transducteur (30) à ultrasons de façon à délimiter un volume interne de réception dudit premier transducteur à ultrasons, et la deuxième manche (11) étant configurée de manière à recouvrir au moins partiellement ledit deuxième transducteur (31) à ultrasons de façon à délimiter un volume interne de réception dudit deuxième transducteur à ultrasons, le volume interne principal du réceptacle (9) principal étant en communication avec ledit volume interne de réception dudit premier transducteur à ultrasons et avec ledit volume interne de réception dudit deuxième transducteur à ultrasons.

2. Débitmètre selon la revendication 1, **caractérisé en ce qu'**il comprend une carte (25) électronique disposée à l'intérieur dudit réceptacle (9) principal, et **en ce que** le premier et le deuxième transducteur à ultrasons comprennent chacun une plaquette piézoélectrique et deux tiges (32, 33, 34, 35) conductrices reliées électriquement à ladite carte électronique.

3. Débitmètre selon la revendication 2, **caractérisé en ce que** les deux tiges (32, 33, 34, 35) conductrices de chaque transducteur à ultrasons sont rigides et s'étendent parallèlement l'une par rapport à l'autre, selon une direction orthogonale au plan de la carte (25) électronique.

4. Débitmètre selon l'une des revendications 1 à 3, **caractérisé en ce que** chaque transducteur (30, 31) est fixé à ladite canalisation par une bride (40, 41) de montage.

5. Débitmètre selon l'une des revendications 1 à 4, **caractérisé en ce que** le réceptacle (9) principal comprend une ouverture (15) principale et un capot (16) principal apte à obturer ladite ouverture principale.

6. Débitmètre selon l'une des revendications 2 ou 3 et selon la revendication 5, **caractérisé en ce qu'**il comprend en outre un afficheur (17) relié électriquement à ladite carte (25) électronique, ledit capot (16) principal définissant un logement de réception dudit afficheur et comprenant un joint périphérique disposé autour dudit logement de réception dudit afficheur.

7. Débitmètre selon l'une des revendications 1 à 6, **caractérisé en ce que** chaque manche (10, 11) comporte une ouverture (19, 20), et **en ce que** le débitmètre comporte en outre un capot (21, 22) secondaire apte à obturer chaque ouverture (19, 20).

8. Débitmètre selon l'une des revendications 1 à 7, **caractérisé en ce qu'**il comprend un matériau de comblement choisi dans un groupe formé de résines thermodurcies, ledit matériau de comblement remplissant au moins ledit volume interne principal du réceptacle (9) principal.

9. Débitmètre selon la revendication 8, **caractérisé en ce que** ledit matériau de comblement remplit totalement ledit volume interne principal du réceptacle (9) principal, le volume interne de réception dudit premier transducteur (30) et le volume interne de réception dudit deuxième transducteur (31) à ultrasons.

10. Procédé de montage d'un débitmètre selon les revendications 1 à 9, **caractérisé en ce qu'**il comporte les étapes suivantes :
- on fixe le premier transducteur (30) à ultrasons et le deuxième transducteur (31) à ultrasons sur la canalisation (2),
- on monte le boîtier (8) sur ladite canalisation de manière à ce que la première manche (10) recouvre au moins partiellement ledit premier transducteur à ultrasons de façon à délimiter le volume interne de réception dudit premier transducteur à ultrasons, et à ce que la deuxième manche (11) recouvre au moins partiellement ledit deuxième transducteur à ultrasons de façon à délimiter le volume interne de réception dudit deuxième transducteur à ultrasons, le volume interne principal du réceptacle principal étant en communication avec ledit volume interne de réception dudit premier transducteur à ultrasons et avec ledit volume interne de réception dudit deuxième transducteur à ultrasons.

11. Procédé selon la revendication 10, **caractérisé en ce qu'**il comporte en outre une étape lors de laquelle on dispose la carte (25) électronique à l'intérieur dudit réceptacle (9) principal.

12. Procédé selon l'une des revendications 10 à 11, **caractérisé en ce que**, consécutivement audit montage dudit boîtier (8) sur ladite canalisation (2), on relie électriquement chaque tige conductrice de chaque transducteur à ultrasons à ladite carte (25) électronique.

13. Procédé selon la revendication 12, **caractérisé en ce que**, chaque manche comportant une ouverture (19, 20) et le débitmètre comportant en outre un capot secondaire (21, 22) apte à obturer chaque ouverture, après avoir relié électriquement chaque tige (32, 33, 34, 35) conductrice à ladite carte électronique (25), on introduit le matériau de comblement sous forme liquide par les ouvertures (19, 20) de ladite première manche (10) et de ladite deuxième manche (20), puis, on obture les ouvertures (19, 20) par les capots secondaires (21, 22).

## Patentansprüche

1. Durchflussmesser (1), umfassend:
- eine Leitung (2) zum Messen der Durchflussmenge eines Mediums,
- einen ersten Ultraschall-Messwandler (30) und einen zweiten Ultraschall-Messwandler (31), wobei die Ultraschall-Messwandler einander zugewandt gegenüber einer Wand der Leitung montiert sind, wobei die Messwandler (30, 31) entlang einer Messrichtung ausgerichtet sind, die einen Winkel ungleich null und kleiner als 90° mit einer Längsachse der Leitung bildet, **dadurch gekennzeichnet, dass** er ferner ein Gehäuse (8) umfasst, umfassend:
- einen Hauptbehälter (9), der auf die Leitung aufgesetzt ist und ein Hauptinnenvolumen begrenzt;
- einen ersten Schaft (10) und einen zweiten Schaft (11), die sich entlang einer zur Längsachse der Leitung (2) senkrechten Richtung von einem Boden (12) des Hauptbehälters (9) aus abstehend und beidseits der Leitung erstrecken, so dass die Leitung (2) nicht im Inneren des Hauptinnenvolumens des Hauptbehälters (9) ist, wobei der erste Schaft (10) so ausgestaltet ist, dass er den ersten Ultraschall-Messwandler (30) mindestens teilweise bedeckt, so dass ein Innenvolumen zur Aufnahme des ersten Ultraschall-Messwandlers begrenzt wird, und wobei der zweite Schaft (11) so ausgestaltet ist, dass er den zweiten Ultraschall-Messwandler (31) mindestens teilweise bedeckt, so dass ein Innenvolumen zur Aufnahme des zweiten Ultraschall-Messwandlers begrenzt wird, wobei das Hauptinnenvolumen des Hauptbehälters (9) in Verbindung mit dem Innenvolumen zur Aufnahme des ersten Ultraschall-Messwandlers und mit dem Innenvolumen zur Aufnahme des zweiten Ultraschall-Messwandlers steht.

2. Durchflussmesser nach Anspruch 1, **dadurch gekennzeichnet, dass** er eine Elektronikkarte (25) umfasst, die im Inneren des Hauptbehälters (9) angeordnet ist, und dass der erste und der zweite Ultraschall-Messwandler jeweils eine piezoelektrische Scheibe und zwei leitende Stäbe (32, 33, 34, 35), die mit der Elektronikkarte verbunden elektrisch verbunden sind, umfassen.

3. Durchflussmesser nach Anspruch 2, **dadurch gekennzeichnet, dass** die beiden leitenden Stäbe (32, 33, 34, 35) jedes Ultraschall-Messwandlers starr sind und sich parallel zueinander entlang einer zu der Ebene der Elektronikkarte (25) senkrechten Richtung erstrecken.

4. Durchflussmesser nach einem der Ansprüche 1 bis 3, **dadurch gekennzeichnet, dass** jeder Messwandler (30, 31) an der Leitung mit einem Montageflansch (40, 41) befestigt ist.

5. Durchflussmesser nach einem der Ansprüche 1 bis 4, **dadurch gekennzeichnet, dass** der Hauptbehälter (9) eine Hauptöffnung (15) und eine Hauptabdeckung (16), die geeignet ist, die Hauptöffnung zu verschließen, umfasst.

6. Durchflussmesser nach einem der Ansprüche 2 oder 3 und nach Anspruch 5, **dadurch gekennzeichnet, dass** er ferner eine Anzeige (17) umfasst, die mit der Elektronikkarte (25) elektrisch verbunden ist, wobei die Hauptabdeckung (16) einen Sitz zur Aufnahme der Anzeige definiert und eine Umfangsdichtung umfasst, die um den Sitz zur Aufnahme der Anzeige herum angeordnet ist.

7. Durchflussmesser nach einem der Ansprüche 1 bis 6, **dadurch gekennzeichnet, dass** jeder Schaft (10, 11) eine Öffnung (19, 20) umfasst und dass der Durchflussmesser ferner eine Nebenabdeckung (21, 22) umfasst, die geeignet ist, jede Öffnung (19, 20) zu verschließen.

8. Durchflussmesser nach einem der Ansprüche 1 bis 7, **dadurch gekennzeichnet, dass** er ein Füllmaterial umfasst, das aus einer aus wärmehartbaren Harzen gebildeten Gruppe gewählt ist, wobei das Füllmaterial mindestens das Hauptinnenvolumen des Hauptbehälters (9) füllt.

9. Durchflussmesser nach Anspruch 8, **dadurch gekennzeichnet, dass** das Füllmaterial das Hauptinnenvolumen des Hauptbehälters (9), das Innenvolumen zur Aufnahme des ersten Messwandlers (30) und das Innenvolumen zur Aufnahme des zweiten Ultraschall-Messwandlers (31) vollständig füllt.

10. Verfahren zur Montage eines Durchflussmessers nach den Ansprüchen 1 bis 9, **dadurch gekennzeichnet, dass** es die folgenden Schritte umfasst:
- Befestigen des ersten Ultraschall-Messwandlers (30) und des zweiten Ultraschall-Messwandlers (31) an der Leitung (2),
- Montieren des Gehäuses (8) an der Leitung derart, dass der erste Schaft (10) den ersten Ultraschall-Messwandler mindestens teilweise bedeckt, so dass das Innenvolumen zur Aufnahme des ersten Ultraschall-Messwandlers begrenzt wird, und dass der zweite Schaft (11) den zweiten Ultraschall-Messwandlers mindestens teilweise bedeckt, so dass das Innenvolumen zur Aufnahme des zweiten Ultraschall-Messwandlers begrenzt wird, wobei das Hauptinnenvolumen des Hauptbehälters in Verbindung mit dem Innenvolumen zur Aufnahme des ersten Ultraschall-Messwandlers und mit dem Innenvolumen zur Aufnahme des zweiten Ultraschall-Messwandlers steht.

11. Verfahren nach Anspruch 10, **dadurch gekennzeichnet, dass** es ferner einen Schritt umfasst, bei dem die Elektronikkarte (25) im Inneren des Hauptbehälters (9) angeordnet wird.

12. Verfahren nach einem der Ansprüche 10 bis 11, **dadurch gekennzeichnet, dass** nach der Montage des Gehäuses (8) an der Leitung (2) jeder leitende Stab jedes Ultraschall-Messwandlers mit der Elektronikkarte (25) elektrisch verbunden wird.

13. Verfahren nach Anspruch 12, **dadurch gekennzeichnet, dass**, wenn jeder Schaft eine Öffnung (19, 20) umfasst und der Durchflussmesser ferner eine Nebenabdeckung (21, 22) umfasst, die geeignet ist, jede Öffnung zu verschließen, nachdem jeder leitende Stab (32, 33, 34, 35) mit der Elektronikkarte (25) elektrisch verbunden wurde, das Füllmaterial in flüssiger Form durch die Öffnungen (19, 20) des ersten Schafts (10) und des zweiten Schafts (20) eingeführt wird, dann die Öffnungen (19, 20) mit den Nebenabdeckungen (21, 22) verschlossen werden.

## Claims

1. A flowmeter (1) including:
- a pipe (2) for measuring the flowrate of a fluid,
- a first ultrasound transducer (30) and a second ultrasound transducer (31), said ultrasound transducers being mounted facing one another relative to a wall of said pipe, said transducers (30, 31) being oriented in a measurement direction at a non-zero angle less than 90° to a longitudinal axis of the pipe,
**characterized in that** it further includes a casing (8) including:
- a main receptacle (9) mounted on said pipe and delimiting a main internal volume;
- a first sleeve (10) and a second sleeve (11) extending in a direction orthogonal to the longitudinal axis of said pipe (2), projecting from a bottom (12) of the main receptacle (9) and on either side of said pipe so as the pipe (2) is not inside the main internal volume of the main receptacle (9), the first sleeve (10) being configured so as to cover said first ultrasound transducer (30) at least partly so as to delimit an internal volume to receive said first ultrasound transducer and the second sleeve (11) being configured so as to cover said second ultrasound transducer (31) at least partly so as to delimit an internal volume to receive said second ultrasound transducer, the main internal volume of the main receptacle (9) being in communication with said internal volume to receive said first ultrasound transducer and with said internal volume to receive said second ultrasound transducer.

2. The flowmeter as claimed in claim 1, **characterized in that** it includes an electronic circuit card (25) disposed inside said main receptacle (9) and **in that** the first and second ultrasound transducers each include a piezoelectric plate and two conductive pins (32, 33, 34, 35) electrically connected to said electronic circuit card.

3. The flowmeter as claimed in claim 2, **characterized in that** the two conductive pins (32, 33, 34, 35) of each ultrasound transducer are rigid and extend parallel to one another in a direction orthogonal to the plane of the electronic circuit card (25).

4. The flowmeter as claimed in any one of claims 1 to 3, **characterized in that** each transducer (30, 31) is fixed to said pipe by a mounting fixture (40, 41).

5. The flowmeter as claimed in any one of claims 1 to 4, **characterized in that** the main receptacle (9) includes a main opening (15) and a main cover (16) adapted to block said main opening.

6. The flowmeter as claimed in either one of claims 2 and 3 and in claim 5, **characterized in that** it further includes a display (17) electrically connected to said electronic circuit card (25), said main cover (16) defining a housing to receive said display and including a peripheral seal disposed around said housing to receive said display.

7. The flowmeter as claimed in any one of claims 1 to 6, **characterized in that** each sleeve (10, 11) includes an opening (19, 20) and **in that** the flowmeter further includes a secondary cover (21, 22) adapted to block each opening (19, 20).

8. The flowmeter as claimed in any one of claims 1 to 7, **characterized in that** it includes a packing material chosen in a group formed of thermoset resins, said packing material filling at least said main internal volume of the main receptacle (9).

9. The flowmeter as claimed in claim 8, **characterized in that** said packing material totally fills said main internal volume of the main receptacle (9), the internal volume to receive said first ultrasound transducer (30) and the internal volume to receive said second ultrasound transducer (31).

10. A method of assembling a flowmeter as claimed in claims 1 to 9, **characterized in that** it includes the following steps:
- the first ultrasound transducer (30) and the second ultrasound transducer (31) are fixed to the pipe (2),
- the casing (8) is mounted on said pipe so that the first sleeve (10) covers said first ultrasound transducer at least partly so as to delimit the internal volume to receive said first ultrasound transducer and the second sleeve (11) covers said second ultrasound transducer at least partly so as to delimit the internal volume to receive said second ultrasound transducer, the main internal volume of the main receptacle being in communication with said internal volume to receive said first ultrasound transducer and with said internal volume to receive second ultrasound transducer.

11. The method as claimed in claim 10, **characterized in that** it further includes a step in which the electronic circuit card (25) is disposed inside said main receptacle (9).

12. The method as claimed in any one of claims 10 to 11, **characterized in that**, after mounting said casing (8) on said pipe (2), each conductive pin of each ultrasound transducer is electrically connected to said electronic circuit card (25).

13. The method as claimed in claim 12, **characterized in that**, each sleeve including an opening (19, 20) and the flowmeter further including a secondary cover (21, 22) adapted to block each opening, after electrically connecting each conductive pin (32, 33, 34, 35) to said electronic circuit card (25) the packing material is introduced in liquid form via the openings (19, 20) of said first sleeve (10) and of said second sleeve (20) after which the openings (19, 20) are blocked by the secondary covers (21, 22).
